Europäisches Patentamt

European Patent Office

Office européen des brevets

(11) Veröffentlichungsnummer : **0 254 020**
**B1**

# (12) EUROPÄISCHE PATENTSCHRIFT

(45) Veröffentlichungstag der Patentschrift :
03.01.90

(51) Int. Cl.⁵ : **C 21 D 9/60**, **H 05 B 6/02**

(21) Anmeldenummer : **87108527.0**

(22) Anmeldetag : **12.06.87**

(54) Induktive Erwärmung der Kanten langgestreckter, bewegter Werkstücke.

(30) Priorität : 20.06.86 DE 3620718

(43) Veröffentlichungstag der Anmeldung :
27.01.88 Patentblatt 88/04

(45) Bekanntmachung des Hinweises auf die Patenterteilung : 03.01.90 Patentblatt 90/01

(84) Benannte Vertragsstaaten :
AT DE FR GB IT SE

(56) Entgegenhaltungen :
EP--A-- 0 183 209
DE--B-- 1 062 847
PATENT ABSTRACTS OF JAPAN, Band 3, Nr. 14 (C-
36)[109], 8. Februar 1979; & JP - A - 53 141 113
(MITSUBISHI DENKI) 12.08.1978

(73) Patentinhaber : **Asea Brown Boveri Aktiengesellschaft
Kallstadter Strasse 1
D-6800 Mannheim-Käfertal (DE)**

(72) Erfinder : **Mauve, Hans-Werner
Am Nierhof 16
D-4670 Lünen (DE)**
Erfinder : **Wicker, Helmut, Dipl.-Ing.
Rehbergstrasse 38
D-5804 Herdecke (DE)**
Erfinder : **Hegewaldt, Fritz, Dipl.-Ing.
Am Hegede 22
D-5804 Herdecke (DE)**

(74) Vertreter : **Rupprecht, Klaus, Dipl.-Ing. et al
c/o BBC Brown Boveri Aktiengesellschaft ZPT Postfach 100351 Kallstadter Strasse 1
D-6800 Mannheim 1 (DE)**

## Beschreibung

Die Erfindung bezieht sich auf die induktive Erwärmung der Kanten langgestreckter, bewegter Werkstücke, z. B. der kanten eines Eisenbandes in Walzwerken.

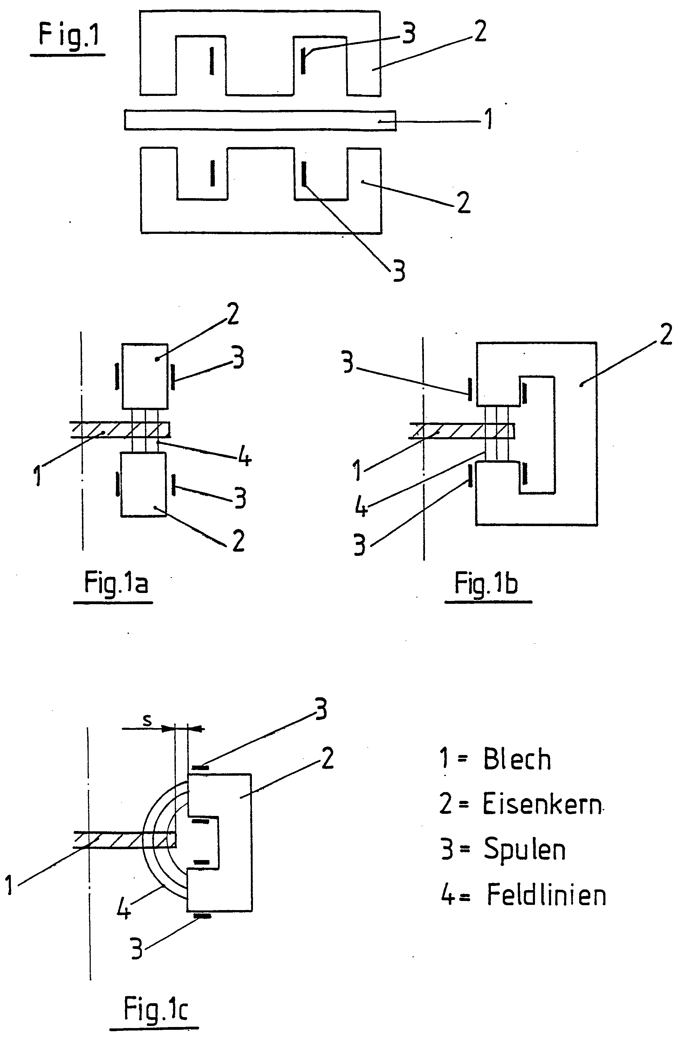

Es ist bekannt, die Kanten eines Eisenbandes durch Induktoren zu erwärmen, die nahe der Bandkante, jedoch innerhalb der Projektion des Bandes auf die Grundfläche, oberhalb und unterhalb des Bandes angeordnet sind (Fig. 1a). Eine weitere bekannte Variante ist die, daß ein C-förmiger Induktor das Band so umgreift, daß die beiden Pole dieses C-förmigen Induktors mit geringem Luftspalt oberhalb und unterhalb der Bandkante liegen (Fig. 1b). Während die erstere Anordnung (mit 2 Induktoren, jeweils ober- und unterhalb des Bandes) die Möglichkeit bietet, den Induktor-Abstand der Banddicke anzupassen, ist bei der zweiten Variante der Abstand zwischen den Polen fest, es sei denn, man macht einen Polschenkel beweglich, was gewisse Probleme bei der Geräuschbildung aufwirft. Mit diesen bekannten Ausführungsformen ist es einfach, die erforderliche Leistungsdichte zur Erwärmung der Kanten des zwischen den Polen des Induktors sich befindenden Bandes zu erzielen.

Entsprechend dem bisher bekannten Stand der Technik ist zur Erreichung eines guten Wirkungsgrades und damit zur Erzielung eines moderaten Energieverbrauchs für die Erwärmung erforderlich, daß die Polflächen des oder der Induktoren sich möglichst nahe dem zu erwärmenden Bandkantenbereichs befinden. Und ein guter Wirkungsgrad ist ausschlaggebend für die Wirtschaftlichkeit des Verfahrens.

Durch eine solche induktive Kantenerwärmung wird die Qualität des Bandes erheblich verbessert, jedoch hat eine derartige Anordnung betrieblich auch erhebliche Nachteile : Der Raum oberhalb des Bandes ist nicht frei, was bei Störungen nachteilig ist, wenn das Band vom Rollgang entfernt werden muß. Außerdem besteht auch im Normalbetrieb die Gefahr einer Beschädigung der Induktoren : Der untere liegt im Bereich herabfallenden Zunders, der obere kann beschädigt werden, wenn sich der Bandanfang nach oben ausbiegt, bei der sogenannten Ski-Bildung am Bandanfang. Für die Anordnung nach Fig. 1b gilt dies analog für den unteren und oberen Pol des Induktors.

Aufgabe der Erfindung ist es nun, ausgehend von den bekannten induktiven Erwärmungen der Kanten, bei denen der Induktor die Kante umfaßt, einen Induktor zu schaffen, mit dem eine ausreichende Leistungsdichte erzielbar ist, um das Werkstück in gewünschter Weise zu erwärmen, ohne daß der Induktor das Band umgreifen muß.

Gelöst wird diese Aufgabe der Erfindung bei einem Verfahren nach dem Oberbegriff des Anspruchs 1 dadurch, daß die Werkstückkante in einem bestimmten Abstand seitlich neben den übereinander stehenden senkrechten Polflächen des Induktors und damit vollständig außerhalb des Induktors geführt wird und sich gegenüber dem Induktor frei nach oben und auch gegebenenfalls nach unten bewegen kann, (Fig. 1c). Die Bandkanten werden im über die beiden Polflächen eines C-förmigen Eisenkerns des Induktors austretenden Streufluß erwärmt.

Eine Anlage zur induktiven Erwärmung der Kanten langgestreckter, beweglicher Werkstücke ist gekennzeichnet in Anspruch 2.

Bei zweckmäßiger Dimensionierung lassen sich, entgegen der bisherigen Meinung, auch mit einer derartigen Anordnung, bei der die Blechkante also vollständig außerhalb des Induktors liegt, Wirkungsgrade erzielen, die denen der bekannten Anordnung nach Fig. 1a und 1b gleichwertig sind.

Es ist selbstverständlich, daß das Feld mit wachsendem Abstand von der Polflächenebene stark abnimmt. Deshalb ist es erforderlich, im Betrieb diesen Abstand S möglichst konstant zu halten. Das wird vorzugsweise dadurch erreicht, daß die Induktoren (an beiden Seiten des Bandes) horizontalliegend an übereinander angeordneten horizontal und quer zur Bewegungsrichtung des bewegten Werkstückes verfahrbaren Trägern befestigt sind. Bei einem derartigen Aufbau und Befestigung des Induktors kann dieser schnell einer sich ändernden Lage der Kanten nachgeführt werden.

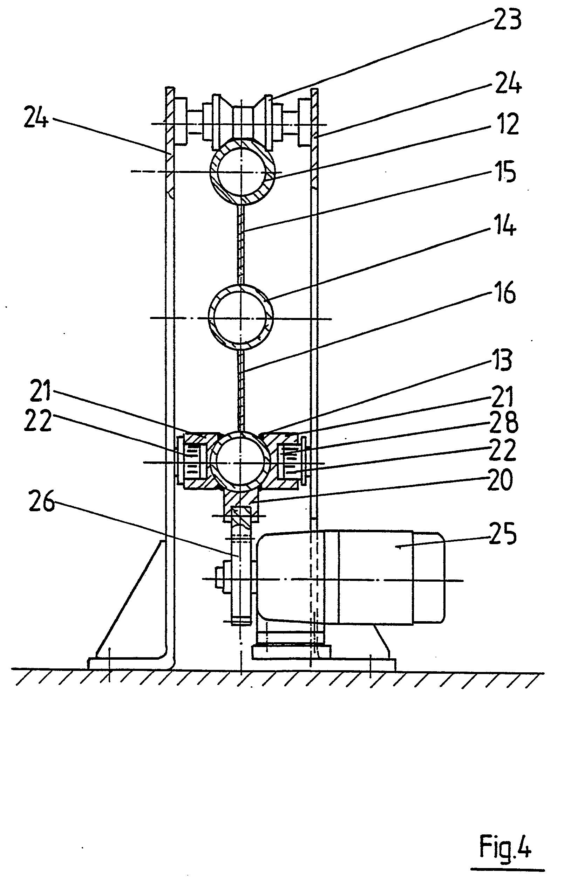

Die Erfindung wird an Hand der Fig. 1 bis 4 der Zeichnung näher erläutert.

Es zeigen :

Fig. 1-1c Schematische Darstellungen, wobei sich Fig. 1, 1a, 1b auf den Stand der Technik und Fig. 1c auf die Erfindung beziehen,

Fig. 2 eine Ansicht von oben auf die erfindungsgemäße induktive Erwärmungsanlage,

Fig. 3 eine Seitenansicht der Anlage nach Fig. 2 und

Fig. 4 einen Schnitt entlang der Linie IV-IV in Fig. 3.

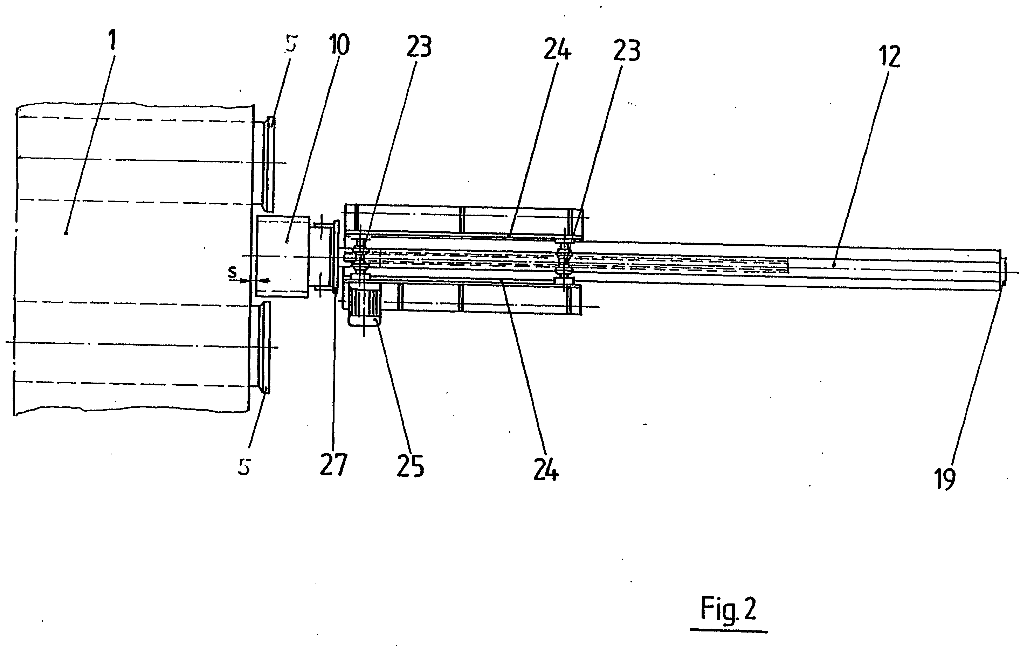

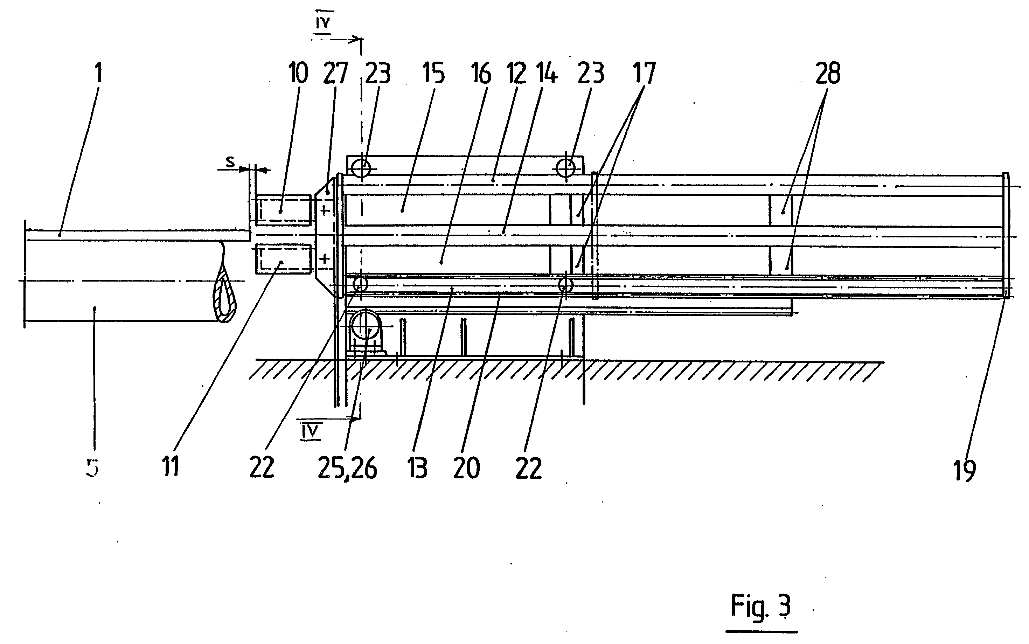

Das Werkstück 1, vorwiegend ein Eisenband und die Transportrollen 5 sind in den Fig. 2 und 3 nur angedeutet. Die Induktorspulen 10 und 11 sind an einem Trägerteil 27 befestigt, das seinerseits an den rohrförmigen Trägers 12, 13 und 14 befestigt ist. Die rohrförmigen Träger 12 und 14 sowie 14 und 13 sind durch Stegbleche 15 und 16 bzw. 17 und 18 miteinander verbunden. Ein Teil 19 ist am Ende der rohrförmigen Träger angeordnet. Der obere rohrförmige Träger 12 ist in Rollen 23 geführt, die in dem Gestell 24 ihrerseits gelagert sind. Der untere Träger 13 besitzt Führungsschienen 21, die eine Nut 28 aufweisen. In diese Nut greifen Rollen 22 ein, die ihrerseits an dem Gestell 24 gelagert sind.

Unterhalb des rohrförmigen Trägers 13 ist an diesem eine Zahnstange 20 befestigt. In diese Zahnstange 20 greift ein Ritzel 26 des Motors 25 ein. In Abhängigkeit von einem Sensor, der die Lage der Kanten des Werkstückes 1 erfaßt, wird über den Motor 25 der Induktor, bestehend aus den Spulen 10 und 11, auf die jeweilige Lage der Kanten nachgeführt, und zwar so, daß zwischen dem Induktor und den Bandkanten ein lichter Abstand einer bestimmten Größe S bestehenbleibt. Dadurch kann das Band bei einer Ski-Bildung am Bandanfang auch nach oben völlig frei ausweichen, ohne hierbei den Induktor zu beschädigen, wie es im Falle eines Induktors geschähe, der das Band von unten und oben umfaßt. Außerdem ist das Band auch jederzeit frei zugänglich, wenn es erforderlich werden sollte, bei Störungen das Band vom Rollgang abzuheben.

## Patentansprüche

1. Verfahren zur induktiven Erwärmung der Kanten langgestreckter, beweglicher Werkstücke, z. B. eines Eisenbandes in Walzwerken, dadurch gekennzeichnet, daß die Werkstückkante in einem bestimmten Abstand (S) seitlich neben den übereinander stehenden senkrechten Polflächen des Induktors und damit vollständig außerhalb des Induktors geführt wird und sich gegenüber dem Induktor völlig frei nach oben und unten bewegen kann.

2. Induktive Anlage zur Erwärmung der Kanten langgestreckter, beweglicher Werkstücke, z. B. eines Eisenbandes in Walzwerken, dadurch gekennzeichnet, daß die Induktoren mit den Spulen (10 und 11) horizontalliegend an übereinander angeordneten, horizontal und quer zur Bewegungsrichtung des bewegten Werkstückes (1) verfahrbaren Trägern (12, 13) befestigt sind, wobei die Induktoren in Abhängigkeit von den Kanten des Werkstückes derart eingeregelt werden, daß die Induktoren von außen stets mit einem bestimmten Abstand S zu den Kanten des Werkstückes (1) gehalten werden, ohne jedoch das Werkstück zu umfassen.

## Claims

1. Method for the inductive heating of the edges of elongate, movable workpieces, e.g. of an iron strip in rolling mills, characterized in that the workpiece edge is guided at a certain distance laterally next to the vertical pole faces of the inductor, said pole faces being situated one above the other, and hence completely outside the inductor and can move with complete freedom upwards and downwards relative to the inductor.

2. Inductive installation for heating the edges of elongate, movable workpieces, e.g. of an iron strip in rolling mills, characterized in that the inductors are attached, with the coils (10 and 11) lying horizontal, to supports (12, 13) arranged one above the other and movable horizontally and transversely to the direction of movement of the moved workpiece (1), the inductors being adjusted as a function of the edges of the workpiece, that the inductors are at all times held from outside at a certain distance S from the edges of the workpiece (1), without however surrounding the workpiece.

## Revendications

1. Procédé de chauffage inductif des arêtes de pièces à usiner allongées et mobiles, par exemple d'un feuillard, dans des laminoirs caractérisé par le fait que l'arête de la pièce à usiner est guidée à une distance déterminée latéralement à côté des surfaces polaires verticales, placées l'une au-dessus de l'autre, de l'inducteur, et par conséquent complètement en dehors de celui-ci, et peut se déplacer entièrement vers le haut et vers le bas vis-à-vis de l'inducteur.

2. Installation inductive pour le chauffage des arêtes de pièces à usiner allongées et mobiles, par exemple d'un feuillard, dans des laminoirs, caractérisée par le fait que les inducteurs, avec les bobines (10 et 11) disposées horizontalement, sont fixés sur des supports (12, 13) placés l'un au-dessus de l'autre et déplaçables horizontalement et transversalement au sens du déplacement de la pièce à usiner mobile (1), les inducteurs étant réglés en fonction des arêtes de la pièce à usiner de manière à être constamment maintenus extérieurement à une distance déterminée S par rapport aux arêtes de la pièce à usiner (1) sans cependant entourer la pièce à usiner.

Fig.1

Fig.1a

Fig.1b

Fig.1c

1 = Blech
2 = Eisenkern
3 = Spulen
4 = Feldlinien

Fig. 2

EP 0 254 020 B1

Fig. 3

Fig.4